# EUROPEAN PATENT APPLICATION

(11) **EP 2 832 977 A1**
(43) Date of publication of application: **04.02.2015**
(21) Application number: 13178630.3
(22) Date of filing: 30.07.2013
(51) Int. Cl.: F02D 35/02, F02D 19/08, F02D 41/00, F02D 41/14

(54) **Method and apparatus for estimating an alcohol concentration in an alcohol fuel mixture supplied to an internal combustion engine**

(71) Applicant: Hitachi, Ltd., Tokyo 100-8280 (JP)
(72) Inventor: Oryoji, Kazuhiro, 81927 Munich (DE); Kumano, Kengo, Ibaraki-ken (JP)
(74) Representative: MERH-IP Matias Erny Reichl Hoffmann

(57) **Abstract**

The present invention relates to a method and an apparatus for estimating an alcohol concentration in an alcohol fuel mixture supplied to an internal combustion engine, wherein the operation of the internal combustion engine supplied with the alcohol fuel mixture is operated in a stoichiometric condition, a first parameter is determined on the basis of a signal from a pressure sensor sensing the pressure inside a combustion chamber of the internal combustion engine being controlled in the stoichiometric condition, and the alcohol concentration of the alcohol fuel mixture is determined on the basis of the determined first parameter and a relation between the first parameter and the alcohol concentration of the alcohol fuel mixture.

## Description

The present invention relates to a method and an apparatus for estimating an alcohol concentration in an alcohol fuel mixture supplied to an internal combustion engine.

### BACKGROUND

In recent years, for supplying internal combustion engines of automobiles, alcohol fuel mixtures such as mixtures of gasoline and alcohol such as ethanol have been introduced into the markets around the world in different alcohol concentrations. For example, E10 has been recently introduced in plural countries, wherein E10 is a fuel mixture of 10% anhydrous ethanol and 90% gasoline which can be used in the internal combustion engines of most modern automobiles and light-duty vehicles without the need for modifications on the engine or fuel system.

Typically the driver can choose among different fuel types having different alcohol concentrations at a gas station in various countries, and depending on the driver's choices, the actual alcohol concentration in the fuel stored in the fuel tank of the automobile can change upon each filling of the tank and is typically unknown when supplying the internal combustion engine. When using alcohol fuel mixtures, it is desirable to control the operation of the internal combustion engine by an engine control unit (ECU) optimized for the actual alcohol concentration comprised in the supplied fuel in order to reduce fuel consumption and in order to reduce the combustion generated emissions as good as possible. For such reasons, it is necessary to detect the actual alcohol concentration of the supplied fuel in order to be able to optimize the control.

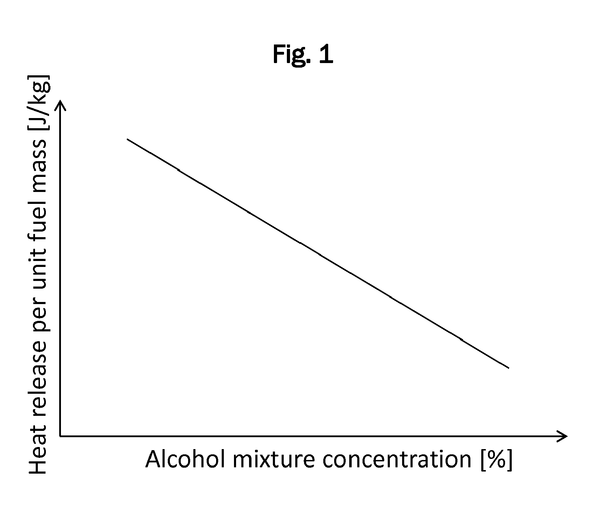

In the prior art, the actual alcohol concentration of the supplied fuel is typically detected on the basis of a quantity referred to as the heat release per unit fuel mass (e.g. in units of J/kg) which can be calculated by first calculating the heat release rate and by calculating the unit fuel mass based on the sensor outputs of the fuel-air ratio (F/A) sensor and the mass flow sensor output. Based on the relationship between the heat release per unit fuel mass and the alcohol mixture concentration as shown in Fig. 1, the alcohol mixture concentration can be determined in principle. Examples of such alcohol mixture concentration determination based on the heat release per unit fuel mass is described in JP-A-Sho62-88153 and JP-A-2009-74515 (US 2011/0301828 A1).

However, the calculation of the heat release per unit fuel mass according to the prior art produces significant processing load on the ECU and requires measurement of the fuel-air ratio by an F/A sensor which is suitable for gasoline but rather inaccurate and difficult to impossible for ethanol fuel mixtures.

### SUMMARY OF THE INVENTION

In order to avoid the problems of the prior art as discussed above, it is an object of the present invention to provide a solution for efficiently and reliably estimating an alcohol concentration in an alcohol fuel mixture supplied to an internal combustion engine. Specifically, it is an object of the present invention to provide a way for reliably, efficiently and accurately estimating an alcohol concentration in an alcohol fuel mixture supplied to an internal combustion engine at reduced processing burden for the ECU, e.g. by avoiding the need to calculate the heat release per unit fuel mass, and by avoiding the need of using output of an F/A sensor.

In view of the above objects of the present invention, according to the present invention, there is proposed a method for estimating an alcohol concentration in an alcohol fuel mixture supplied to an internal combustion engine according to claim 1, an apparatus for estimating an alcohol concentration in an alcohol fuel mixture supplied to an internal combustion engine according to claim 12, and a computer program product according to claim 14. Dependent claims relate to preferred embodiments of the present invention.

According to an aspect of the present invention, there may be provided a method for estimating an alcohol concentration in an alcohol fuel mixture supplied to an internal combustion engine, the method comprising controlling the operation of the internal combustion engine supplied with the alcohol fuel mixture in a stoichiometric condition, determining a first parameter on the basis of a signal from a pressure sensor sensing the pressure inside a combustion chamber of the internal combustion engine being controlled in the stoichiometric condition, and determining the alcohol concentration of the alcohol fuel mixture on the basis of the determined first parameter and a pre-stored relation between the first parameter and the alcohol concentration of the alcohol fuel mixture.

According to the invention, it is advantageously possible to estimate the alcohol concentration in an alcohol fuel mixture supplied to an internal combustion engine directly based on a sensor signal of the pressure sensor measuring the pressure inside the combustion chamber because the engine is first controlled to be operated in the stoichiometric condition for performing the estimation of the alcohol concentration in the alcohol fuel mixture, wherein it is possible to find a relation between the pressure-indicative parameter and the alcohol concentration based on engine experiments and pre-storing the relationship in storage units of an engine control unit. Accordingly, compared to the methods of the prior art, the processing burden can be significantly reduced because it is not necessary to calculate the heat release per unit fuel mass.

According to a preferred aspect, the first parameter may be indicative of a maximum value of a product of the pressure inside the combustion chamber and a volume of the combustion chamber.

According to a preferred aspect, the first parameter may be indicative of a ratio (quotient) between the maximum value of the product of the pressure inside the combustion chamber and the volume of the combustion chamber over a duration time of a fuel injection period per combustion cycle.

According to an alternative preferred aspect, the first parameter may be indicative of a pressure inside the combustion chamber at a first piston position of a piston reciprocating in the combustion chamber.

According to a preferred aspect, the first piston position may be a top dead center position of the piston; or the first piston position may be a piston position at a crank angle later than top dead center position of the piston, preferably when the piston is moving back from the top dead center position towards a bottom dead center position of the piston.

According to a preferred aspect, controlling the operation of the internal combustion engine supplied with the alcohol fuel mixture in a stoichiometric condition may comprise determining whether the internal combustion engine is controlled in the stoichiometric condition based on a signal from an oxygen sensor sensing an oxygen concentration in combusted gas being exhausted from the combustion chamber.

This has the advantage that because the operation of the engine in the stoichiometric condition can be simply, reliably and accurately observed and feed-back controlled by means of an 02 sensor (oxygen sensor), even in case of an alcohol fuel mixture with high alcohol concentration, it is not necessary to use an F/A sensor in the estimation of the alcohol concentration which has lower reliability and accuracy because the F/A sensor output becomes unreliable and inaccurate for increasing alcohol concentrations.

Preferably, controlling the operation of the internal combustion engine supplied with the alcohol fuel mixture in a stoichiometric condition may comprise changing, when it is determined that the internal combustion engine is operating in a lean condition or rich condition, a duration time of a fuel injection period per combustion cycle until it is determined that the internal combustion engine is controlled in the stoichiometric condition based on the signal from the oxygen sensor.

Preferably, changing the duration time of the fuel injection period per combustion cycle may comprise increasing the duration time of the fuel injection period per combustion cycle when it is determined that the internal combustion engine is operating in the lean condition. Preferably, changing the duration time of the fuel injection period per combustion cycle may comprise decreasing the duration time of the fuel injection period per combustion cycle when it is determined that the internal combustion engine is operating in the rich condition.

Further preferably, changing, when it is determined that the internal combustion engine is operating in a lean condition or rich condition, a duration time of a fuel injection period per combustion cycle may be iteratively repeated until it is determined that the internal combustion engine is controlled in the stoichiometric condition.

Further preferably, the fuel injection period per combustion cycle may be iteratively changed by a first amount for a predetermined number of Nref iterations, until it is determined that the internal combustion engine is controlled in the stoichiometric condition, and, when the internal combustion engine is not yet controlled in the stoichiometric condition after the Nref-th iteration, the fuel injection period per combustion cycle may preferably be iteratively changed by a second amount having an absolute value larger than an absolute value of the first amount for the (Nref+1)-th iteration and subsequent iterations until it is determined that the internal combustion engine is controlled in the stoichiometric condition.

This has the advantage that the engine can be brought quicker into a stoichiometric condition in case of alcohol fuel mixtures being supplied to the internal combustion engine by changing the fuel injection period by the larger second amount in case an alcohol concentration of the alcohol fuel mixture is higher, when changing the injection period by the smaller first amount did not bring the internal combustion engine into the stoichiometric condition, in the case that the smaller amount is suitable for feedback control for gasoline or alcohol fuel mixtures having very small alcohol concentration.

According to a preferred aspect, it may be determined that the fuel supplied to the internal combustion engine substantially comprises only gasoline, when the internal combustion engine is controlled in the stoichiometric condition already after Nref or less iterations, and/or the method may preferably refrain from determining the alcohol concentration of the alcohol fuel mixture when the internal combustion engine is controlled in the stoichiometric condition after Nref or less iterations.

According to a preferred aspect, the controlling the operation of the internal combustion engine in the stoichiometric condition may be performed when the internal combustion engine is in an idle state; or the controlling the operation of the internal combustion engine in the stoichiometric condition may be performed when the internal combustion engine is in a constant load condition (steady state torque condition), e.g. driving at a constant speed condition.

According to another aspect of the invention, there may be provided an apparatus for estimating an alcohol concentration in an alcohol fuel mixture supplied to an internal combustion engine according to a method of one or more aspects as discussed above.

According to an aspect of the invention, the apparatus may comprise a control unit for controlling the operation of the internal combustion engine supplied with the alcohol fuel mixture in a stoichiometric condition, a sensor input unit for receiving a signal from a pressure sensor sensing the pressure inside a combustion chamber of the internal combustion engine and/or a signal from an oxygen sensor sensing an oxygen concentration in combusted gas being exhausted from the combustion chamber, and a processing unit for determining a first parameter based on a signal from a pressure sensor sensing the pressure inside a combustion chamber of the internal combustion engine being controlled in the stoichiometric condition, and for determining the alcohol concentration of the alcohol fuel mixture on the basis of the determined first parameter and a pre-stored relation between the first parameter and the alcohol concentration of the alcohol fuel mixture.

Preferably, the apparatus may comprise a memory unit storing the relation between the first parameter and the alcohol concentration of the alcohol fuel mixture.

According to another aspect of the invention, there may be provided a computer program product comprising computer program means for causing a vehicle control apparatus to execute the steps of a method of one or more aspects as discussed above.

### BRIEF DESCRIPTION OF DRAWINGS

**Fig. 1** exemplarily shows a relationship between an alcohol mixture concentration and a heat release per unit fuel mass in units of J/kg.
**Fig. 2A** exemplarily shows a sensor output of a fuel air ratio (F/A) sensor depending on the fuel air ratio.
**Fig. 2B** exemplarily shows a sensor output of an oxygen sensor depending on the fuel air ratio.
**Fig. 3** exemplarily shows an engine system.
**Fig. 4** exemplarily shows a schematic view of an engine control unit.
**Fig. 5** exemplarily shows a schematic view of a control block for alcohol concentration detection.
**Fig. 6** exemplarily shows a flow chart of judging on a detection start of detecting an alcohol concentration according to a first embodiment of the present invention.
**Fig. 7** exemplarily shows a flow chart of performing detecting an alcohol concentration according to the first embodiment of the present invention.
**Fig. 8** exemplarily shows a behavior of a product of pressure and combustion chamber volume over time during one combustion cycle.
**Fig. 9** exemplarily shows a relation between a ratio between the maximum value of the product of the pressure inside the combustion chamber and the volume of the combustion chamber over the injection period, and a heat release per unit fuel mass.
**Fig. 10** exemplarily shows a relation between an alcohol mixture concentration and a ratio between the maximum value of the product of the pressure inside the combustion chamber and the volume of the combustion chamber over the injection period.
**Fig. 11** exemplarily shows a time evolution of the ratio between the maximum value of the product of the pressure inside the combustion chamber and the volume of the combustion chamber for gasoline and a mixture of ethanol and gasoline.
**Fig. 12** is an illustration of an example of various sensor output and ECU parameters during estimating an alcohol concentration in an alcohol fuel mixture according to the first embodiment of the present invention.
**Fig. 13** exemplarily shows a flow chart of judging on a detection start of detecting an alcohol concentration according to a second embodiment of the present invention.
**Fig. 14** exemplarily shows a flow chart of performing detecting an alcohol concentration according to the second embodiment of the present invention.
**Fig. 15** exemplarily shows a behavior of pressure in the combustion chamber as a function of the piston position for gasoline and an alcohol fuel mixture.
**Fig. 16** exemplarily shows a laminar flame speed as a function of the equivalence ratio for gasoline, a mixture of ethanol and gasoline, and ethanol.
**Fig. 17** exemplarily shows a relationship between the pressure at the top dead center position and an alcohol mixture concentration.
**Fig. 18** exemplarily shows a time evolution of the pressure at the top dead center position for gasoline and a mixture of ethanol and gasoline.
**Fig. 19** is an illustration of an example of various sensor output and ECU parameters during estimating an alcohol concentration in an alcohol fuel mixture according to the second embodiment of the present invention.

### Detailed description of figures and preferred embodiments of the present invention

Preferred embodiments of the present invention will be described below with reference to the accompanying figures. The described features and aspects of the embodiments may be modified or combined to form further embodiments of the present invention.

**Fig. 1** exemplarily shows a relationship between an alcohol mixture concentration and a heat release per unit fuel mass in units of J/kg. The heat release per unit fuel mass of gasoline is larger than that of alcohol, and thus a higher concentration of alcohol in a mixture fuel induces lower heat release per unit fuel mass, i.e. the heat release per unit fuel mass decreases for increasing alcohol concentration in an alcohol fuel mixture.

According to this relation, if the heat release per unit fuel mass can be calculated, based on the heat release per unit fuel mass, the alcohol mixture concentration can be detected. However, calculating the heat release per unit fuel mass is difficult because calculating the heat release per combustion cycle forces high processing burden on the engine control unit (ECU) and it is necessary to detect the air fuel ratio by means of an F/A sensor which is difficult up to impossible for alcohol fuel mixtures. Accordingly, it is desirable to find another index which is related to heat release rate per unit fuel mass.

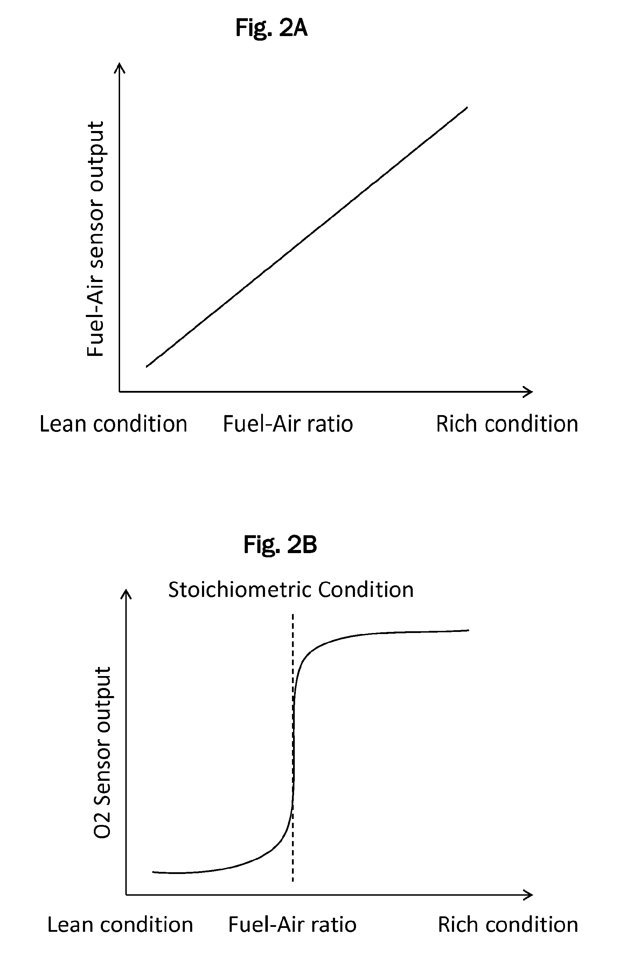

**Fig. 2A** exemplarily shows a sensor output of an F/A (fuel air ratio) sensor depending on the fuel air ratio. In principle, the sensor output of an F/A sensor increases with increasing fuel air ratio. In case the fuel air ratio is low, this is referred to as a lean condition, and in case the fuel air ratio is high, this is referred to as a rich condition.

**Fig. 2B** exemplarily shows a sensor output of an 02 (oxygen) sensor depending on the fuel-air ratio. As can be seen from the Fig. 2B, the 02 sensor can reliably distinguish between a lean and a rich condition, and, in particular, the 02 sensor can reliably detect when the internal combustion engine is operating in a stoichiometric combustion condition. Specifically, the 02 sensor can reliably and accurately detect when the internal combustion engine is operating in a stoichiometric combustion condition for gasoline and alcohol fuel mixtures.

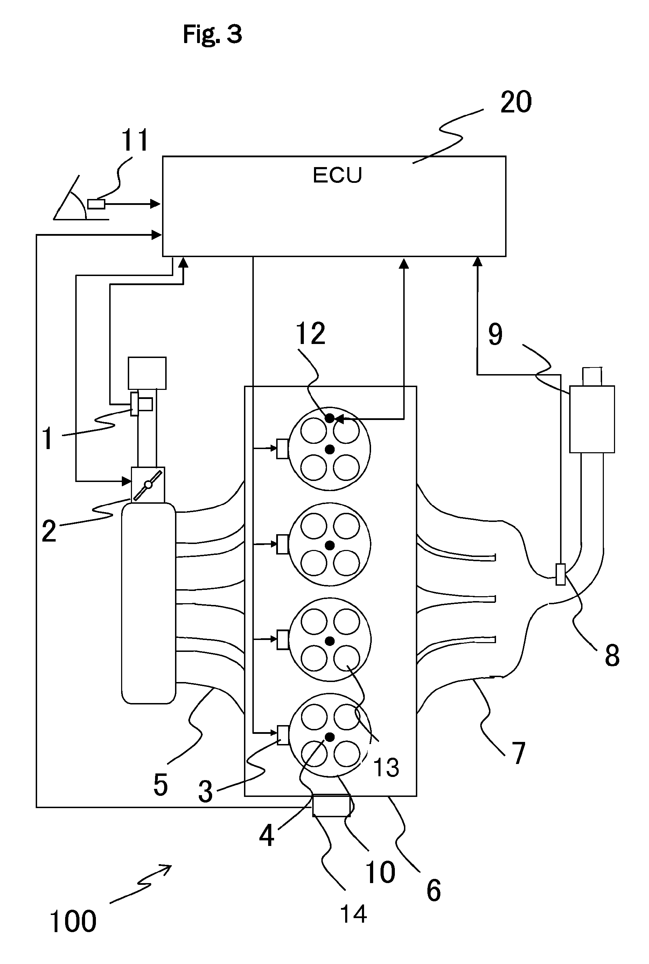

**Fig. 3** exemplarily shows an engine system 100 of an internal combustion engine. Combustion chambers of the internal combustion engine are provided in cylinders 10 of a cylinder block 6 of the internal combustion engine. The cylinders 10 are connected via intake and exhaust valves 13 between an intake port 5 for intaking air to the combustion chambers and an exhaust port 7 for exhausting combustion exhaust products from the combustion chambers. Fuel is injected into combustion chambers by means of fuel injectors 3. A three way catalyst 9 is exemplarily provided at the exhaust port 7.

The engine system 100 of Fig. 3 comprises plural sensors and actuators. Among the sensors, the engine system 100 exemplarily comprises a mass air flow sensor 1, an oxygen sensor 8 (02 sensor), an accelerator position sensor 11, a pressure sensor 12 and a crank angle sensor 14. Among the actuators, the engine system 100 exemplarily comprises a throttle device 2, the fuel injectors 3 and the injection spark plugs 4. The actuators are controlled on the basis of control signals provided by an engine control unit (ECU) 20 which receives sensor input from the sensors and calculates the corresponding actuator control signals on the basis of control programs.

At the intake port 5 of the internal combustion engine, the mass air flow sensor 1 is provided to detect an air mass in the air flow to the combustion chambers and the throttle device 2 is provided to control the air mass introduced into the combustion chambers. The fuel injectors 3 are provided to supply fuel to the combustion chambers and spark plugs 4 are provided for igniting an air fuel mixture in the combustion chambers.

The intake port 5 and an exhaust port 7 are connected to the combustion chambers. At the exhaust port 7, the 02 sensor 8 (oxygen sensor) is provided to detect a concentration of oxygen in the exhaust gas from the combustion chambers, and, in particular, the 02 sensor 8 is adapted to detect a stoichiometric combustion condition of the internal combustion engine (see e.g. Fig. 2B).

In addition, the three way catalyst 9 to reduce harmful emission components is equipped on an exhaust pipe connected to the exhaust port 7. The cylinders 10 are provided to combust the air fuel mixture in the combustion chambers. The accelerator position sensor 11 to detect an acceleration opening angle of an accelerator pedal is equipped on the engine system 100. The pressure sensor 12 to detect a pressure in a combustion chamber is equipped on the cylinder 10.

The engine control unit (ECU) 20 is provided for controlling the internal combustion engine and to generate actuator control signals based on sensors input and intake and exhaust valves to control the air mass inside combustion chamber. Sensor signals from the mass air flow sensor 1 and the 02 sensor 8 are transferred to the ECU 20, and the ECU 20 calculates a demanded torque based on the received sensor signal from the accelerator position sensor 11. The ECU 20 also calculates the engine speed based on sensor outputs of the crank angle sensor 14.

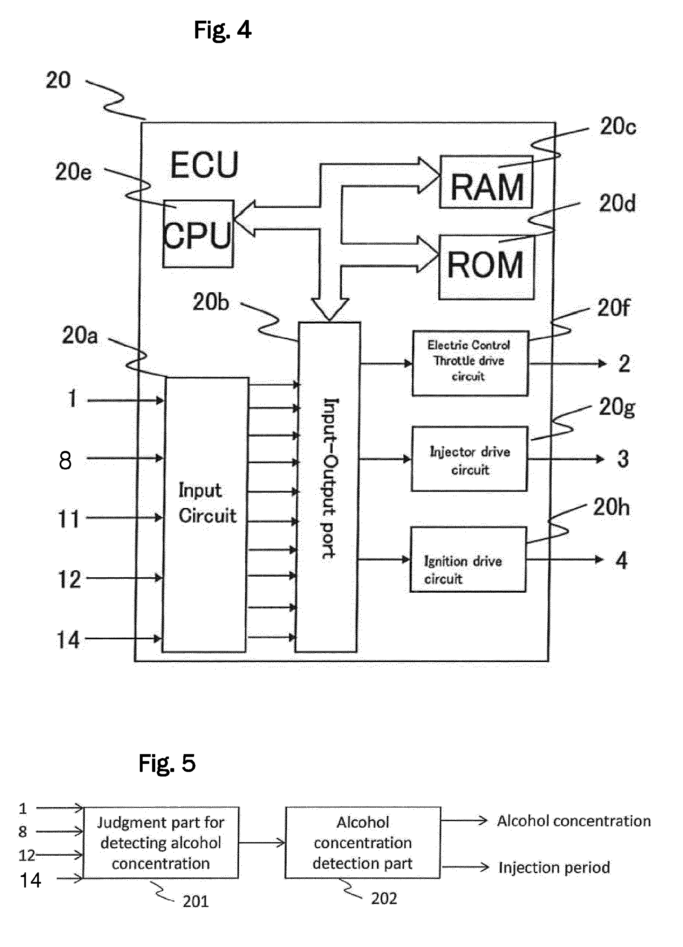

**Fig. 4** exemplarily shows a schematic view of the engine control unit 20. The engine control unit 20 exemplarily comprises an input circuit 20a, an input-output port 20b, a storage unit exemplarily including a RAM 20c and a ROM 20d, a CPU 20e as a processing unit, and plural drive circuits exemplarily including an electric control throttle drive circuit 20f, an injector drive circuit 20g and an ignition drive circuit 20h.

Sensor signals of the mass air flow sensor 1, the 02 sensor 8, the accelerator sensor 11, the pressure sensor 12 and the crank angle sensor 14 are input to the input circuit 20a of the ECU 20. The input sensor signals are transferred from the input circuit 20a to the input-output port 20b, and the values transferred to the input-output port 20b can be stored in the RAM 20c and be applied to calculations of actuator motions as performed by the CPU (central processing unit) 20e.

Control programs for calculation of actuator motion can be pre-stored in the ROM 20d. Actuator signals, actuation amounts and other results as calculated by the control programs can be stored in the RAM 20c, and then the values can be transferred to an output port of the input-output port 20b, and can then be sent to the corresponding actuators through a respective one of a plurality drive circuits. Exemplarily, as drive circuits, the ECU 20 of Fig. 4 has the electric throttle body drive circuit 20f for transferring actuator control signals to the throttle device 2 for control of the throttle device 2, the injector drive circuit 20g for transferring control signals to the injectors 3 for controlling the injectors 3, and the ignition drive circuit 20h for transferring control signals to the spark plugs 4 for control of the spark plugs 4.

**Fig. 5** exemplarily shows a schematic view of a control block for alcohol concentration detection. Such control block may be realized by hardware, software or a combination thereof. The control block of this example has two units, a judgment unit 201 for judging on a condition for start of alcohol concentration detection (i.e. for judging whether an alcohol concentration in a fuel alcohol mixture shall be determined) and an alcohol concentration determination unit 202 for determining or estimating the alcohol concentration in the alcohol fuel mixture. The judgment unit 201 may make use of the senor inputs from the mass air flow sensor 1, the oxygen sensor 8, the pressure sensor 12 and the crank angle sensor 14. The alcohol concentration determination unit 202 may output either the estimated alcohol concentration or the injection period used for the control of the fuel injectors 3.

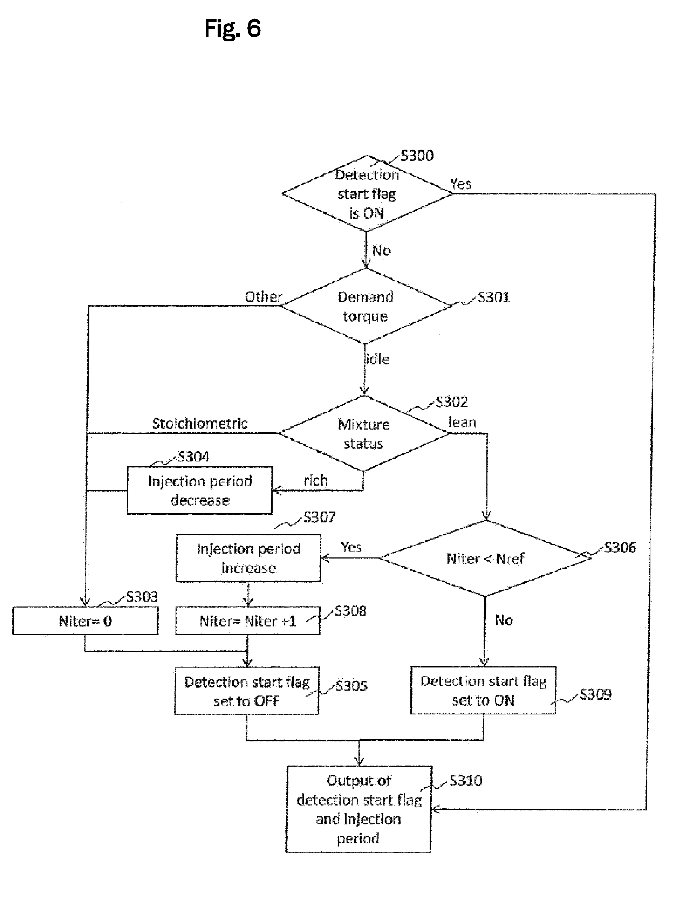

**Fig. 6** exemplarily shows a flow chart of judging on a detection start of detecting an alcohol concentration according to a first embodiment of the present invention. Exemplarily, the process of the flow chart of Fig. 6 can be executed by the judgment unit 201 of Fig. 5.

In step S300, the judgment unit 201 checks whether a detection start flag is ON or OFF. The detection start flag indicates whether alcohol detection shall be executed by the alcohol concentration determination unit 202 or not. If step S300 returns YES, the detection start flag may be output and a current injection period may be output in step S310. The current injection period indicates an injection period of fuel to the combustion chamber on the basis of which the injectors 3 shall be controlled by the engine control unit 20. After step S310, in the next control cycle, the judgment unit 201 may start again with step S300.

If step S300 returns NO, the judgment unit 201 continues with step S301 and determines, on the basis of the sensor output of the accelerator position sensor 11 and/or on the basis of the actuator signal to the throttle device 2, whether the demanded torque is the idle torque or not. If step S301 returns NO, i.e. in case the internal combustion engine is not currently controlled in the idle condition, the judgment unit 201 continues with step S303 and sets an integer Niter to zero, and sets the detection start flag to OFF in step S305. Then, the judgment unit 201 continues with step S310 and outputs the detection start flag and the current injection period. After step S310, in the next control cycle, the judgment unit 201 may start again with step S300.

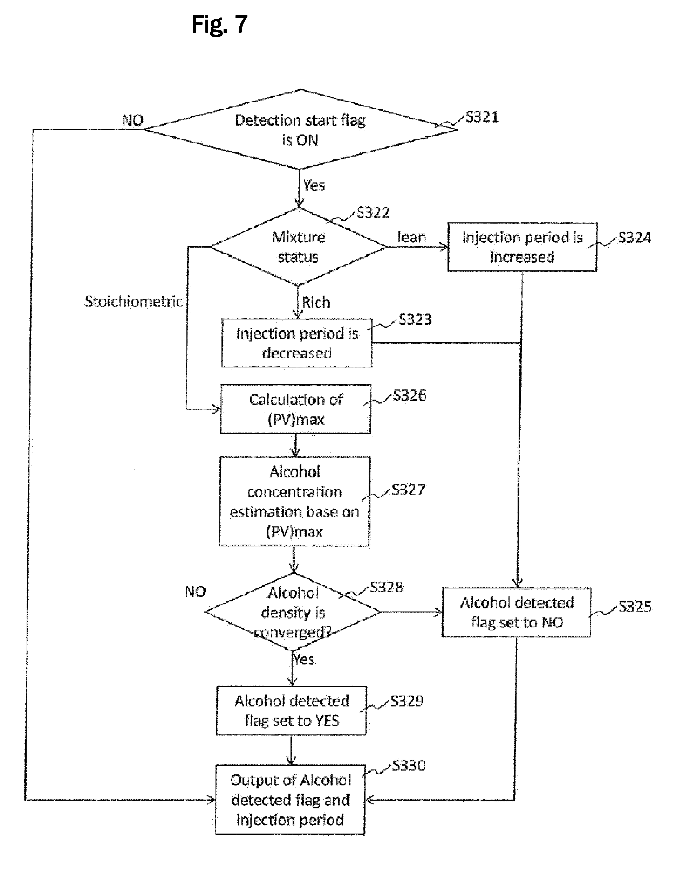

In the above, the integer Niter shall represent an index that indicates a number of control iterations that are required to bring the operation of the internal combustion engine from the lean condition to the stoichiometric condition outside of an alcohol concentration detection loop as described in connection with Fig. 7 below.

On the other hand, if step S301 returns YES, i.e. when the internal combustion engine is controlled in the idle condition, the judgment unit 201 continues with step S302 and determines the combustion condition of the internal combustion engine on the basis of the sensor input from the 02 sensor 8. Specifically, the judgment unit 201 determines whether the internal combustion engine is operating in the lean condition, in the stoichiometric condition or in the rich condition based on the sensor input from the 02 sensor 8 (see e.g. Fig. 2B above).

In case the judgment unit 201 determines that the internal combustion engine is operating in the stoichiometric condition in step S302, the judgment unit 201 continues with step S303 and sets the integer Niter to zero, and sets the detection start flag to OFF in step S305. Then, the judgment unit 201 continues with step S310 and outputs the detection start flag and the current injection period. After step S310, in the next control cycle, the judgment unit 201 may start again with step S300 in the next iteration.

In case the judgment unit 201 determines that the internal combustion engine is operating in the rich condition in step S302, the judgment unit 201 continues with step S304 and decreases the injection period by a specific amount in order to reduce the fuel air ratio and bring the internal combustion engine to the stoichiometric condition, and then continues with step S303 and sets the integer Niter to zero, and sets the detection start flag to OFF in step S305. Then, the judgment unit 201 continues with step S310 and outputs the detection start flag and the current (decreased) injection period. After step S310, in the next control cycle, the judgment unit 201 may start again with step S300 in the next iteration.

In case the judgment unit 201 determines that the internal combustion engine is operating in the lean condition in step S302, the judgment unit 201 continues with step S306 and determines whether the current iteration value of the integer Niter is smaller than a reference value Nref (which typically may be chosen as an integer e.g. from 5 to 10). If step S306 returns YES, the judgment unit 201 continues with step S307 and increases the injection period by a specific amount in order to reduce the fuel air ratio and bring the internal combustion engine to the stoichiometric condition, and then continues with step S308 and increases the integer Niter by one (i.e. Niter -> Niter + 1), and sets the detection start flag to OFF in step S305. Then, the judgment unit 201 continues with step S310 and outputs the detection start flag and the current (increased) injection period. After step S310, in the next control cycle, the judgment unit 201 may start again with step S300 in the next iteration.

On the other hand, once step S306 returns NO, the judgment unit 201 continues with step S309 and sets the detection start flag to ON, and then continues with step S310 and outputs the detection start flag and the current injection period. After step S310, in the next control cycle, the judgment unit 201 may start again with step S300 in the next iteration.

If step S306 returns NO, this basically indicates that the internal combustion engine is still operating in the lean condition and not in the stoichiometric (or rich) condition although the injection period for the injectors 3 for increasing the fuel air ratio has been increased by the specific amount for a number of Nref iterations already. Here, the number of Nref is chosen such that the internal combustion engine would be operating in the stoichiometric (or rich) condition if pure gasoline is supplied to the internal combustion chamber. Thus, as soon as step S306 returns NO, the judgment unit 201 determines that an alcohol fuel mixture is supplied to the internal combustion engine and therefore initiates the estimation of the alcohol concentration in the alcohol fuel mixture by the alcohol concentration detection unit 202 by setting the detection start flag to ON in step S309.

It is to be noted that the injection amount can be changed by an absolute amount in steps S304 and S307 described above, or the injection amount can be changed by a relative amount, e.g. by setting the injection amount to C*current injection amount (C<1) in step S304 and by setting the injection amount to D*current injection amount (D>1) in step S307.

**Fig. 7** exemplarily shows a flow chart of performing detecting an alcohol concentration according to the first embodiment of the present invention. Exemplarily, the process of the flow chart of Fig. 7 can be executed by the alcohol concentration detection unit 202 of Fig. 5.

In step S321, the alcohol concentration detection unit 202 checks whether the detection start flag is set to ON or OFF. In case step S321 returns NO, the alcohol concentration detection unit 202 continues with step S330 and outputs an alcohol detected flag and the current injection period. The alcohol detected flag indicates whether the alcohol concentration has been estimated by the alcohol concentration detection unit 202 as will become obvious from the below description. After step S330, in the next control cycle, the alcohol concentration detection unit 202 may start again with step S321 in the next iteration.

In case step S321 returns YES, i.e. when the detection start flag is set to ON (e.g. when step 309 has been executed by the judgment unit 201 above), the alcohol concentration detection unit 202 continues with step S322 and determines the combustion condition of the internal combustion engine on the basis of the sensor input from the 02 sensor 8. Specifically, the alcohol concentration detection unit 202 determines whether the internal combustion engine is operating in the lean condition, in the stoichiometric condition or in the rich condition based on the sensor input from the 02 sensor 8 (see e.g. Fig. 2B above).

If step S322 results in determining that the internal combustion engine is operating in the lean condition, the alcohol concentration detection unit 202 continues with step S324 and increases the injection period for the control of the injectors 3 in step S324 and sets an alcohol detected flag to NO in step S325. On the other hand, if step S322 results in determining that the internal combustion engine is operating in the rich condition, the alcohol concentration detection unit 202 continues with step S323 and decreases the injection period for the control of the injectors 3 in step S324 and sets an alcohol detected flag to NO in step S325. After step S325, the alcohol concentration detection unit 202 continues with step S330 and outputs the alcohol detected flag and the current injection period. After step S330, in the next control cycle, the alcohol concentration detection unit 202 may start again with step S321 in the next iteration.

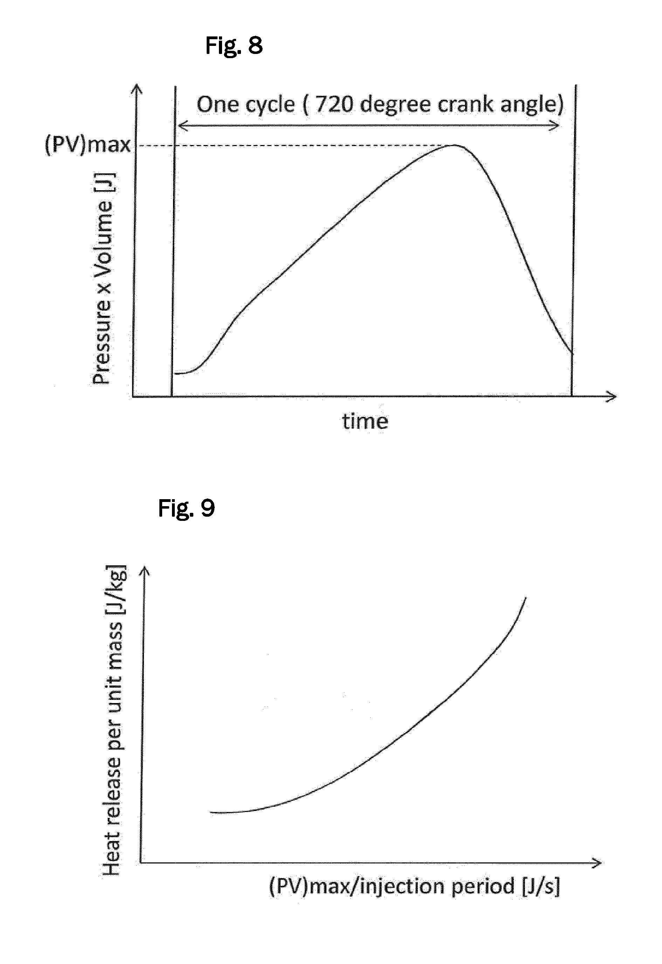

In case step S322 results in determining that the internal combustion engine is operating in the stoichiometric condition, the alcohol concentration detection unit 202 continues with step S326 and calculates a parameter (PV)max which indicates the maximum of the product of the pressure inside the combustion chamber and the volume of the combustion chamber during one combustion cycle (see Fig. 8 below). The parameter (PV)max can be calculated by the alcohol concentration detection unit 202 based on the sensor inputs from the crank angle sensor 14 and the pressure sensor 12, wherein the volume of the combustion chamber may be pre-stored in storage units of the engine control unit 20.

In step S327, the alcohol concentration detection unit 202 continues with estimating the alcohol concentration of the alcohol fuel mixture based on a relation between the alcohol concentration and the ratio of the parameter (PV)max and the current injection period. Such relation can be pre-stored in storage units of the engine control unit 20. The principles of the determination will be discussed further below.

In step S328, the alcohol concentration detection unit 202 continues with checking whether the estimated alcohol concentration has converged (i.e. whether the estimated alcohol concentration is similar to the alcohol concentration estimated in previous iterations). The purpose of step S328 is to make the estimation of the alcohol concentration more accurate, reliable and robust in that the effect of potential cycle-by-cycle variations in the measurement can be reduced. It is further possible to make the estimation of the alcohol concentration more accurate, reliable and robust by averaging the estimated values of plural cycle iterations as soon as the estimated values.

If step S328 returns NO, the alcohol concentration detection unit 202 continues with step 325 and sets the alcohol detected flag to NO. Otherwise, if step S328 returns YES, the alcohol concentration detection unit 202 continues with step 329 and sets the alcohol detected flag to YES. Then, in both cases, the alcohol concentration detection unit 202 continues with step S330 and outputs the alcohol detected flag and the current injection period. After step S330, in the next control cycle, the alcohol concentration detection unit 202 may start again with step S321 in the next iteration.

In the above steps S323 and S324, the injection period may be changed similar to steps S304 and S307 as described above, i.e. the injection amount can be changed by an absolute amount in steps S323 and S324 described above, or the injection amount can be changed by a relative amount, e.g. by setting the injection amount to C*current injection amount (C<1) in step S323 and by setting the injection amount to D*current injection amount (D>1) in step S324.

Here, the specific amount may be larger than the specific amount of steps S304 and S307 so that the injection period is changed more significantly in steps S323 and S324 compared to steps S304 and S307. Further alternatively, in step S324, in order to approach the stoichiometric condition faster, the increased new injection period may be calculated as 0.5*(Current injection period + reference injection period of ethanol fuel), wherein the reference injection period of ethanol fuel is an injection period for controlling the internal combustion engine in the stoichiometric condition in case ethanol is supplied to the internal combustion engine in the idle condition.

**Fig. 8** exemplarily shows a behavior of a product of pressure and combustion chamber volume over time during one combustion cycle. Fig. 8 shows the definition of the parameter (PV)max as referred to in connection with step S326 above. The parameter (PV)max corresponds to the maximum of the product of the pressure in the combustion chamber as sensed by the pressure sensor 12 and the volume of the combustion chamber over one combustion cycle.

**Fig. 9** exemplarily shows a relation between a ratio between the maximum value of the product of the pressure inside the combustion chamber and the volume of the combustion chamber (i.e. the quotient of (PV)max as discussed above over the injection period) and a heat release per unit fuel mass. Such relation may be determined for the internal combustion engine on an engine test bench. In principle, under the same ignition timing, the quotient of (PV)max over the injection period is proportional to the heat release per unit fuel mass, and the proportional curve can be defined on the engine test bench during an experiment under the same ignition timing and the same injection timing.

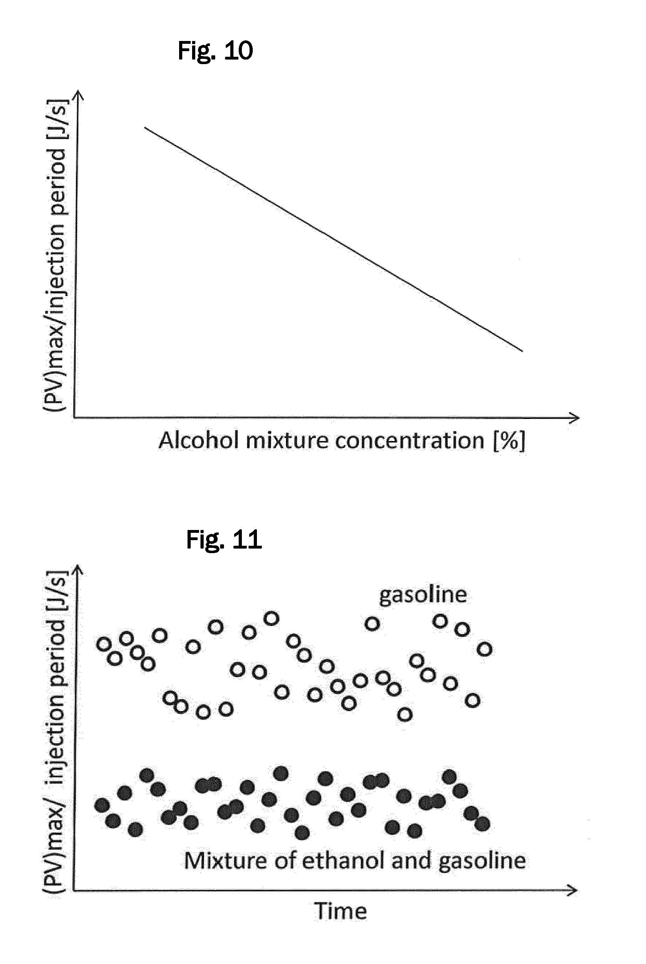

**Fig. 10** exemplarily shows a relation between an alcohol mixture concentration and a ratio between the maximum value of the product of the pressure inside the combustion chamber and the volume of the combustion chamber over the injection period. Such relation can be pre-stored in a storage unit of the engine control unit 20 such as e.g. in ROM 20d.

**Fig. 11** exemplarily shows a time evolution of the ratio between the maximum value of the product of the pressure inside the combustion chamber and the volume of the combustion chamber for gasoline and a mixture of ethanol and gasoline. As can be seen from Fig. 11, the quotient of (PV)max over the injection period is higher for gasoline compared to the quotient of (PV)max over the injection period of a mixture of ethanol and gasoline. Such relation can be used in step S327 above for estimating the alcohol concentration in the alcohol fuel mixture with reduced processing burden on the engine control unit 20.

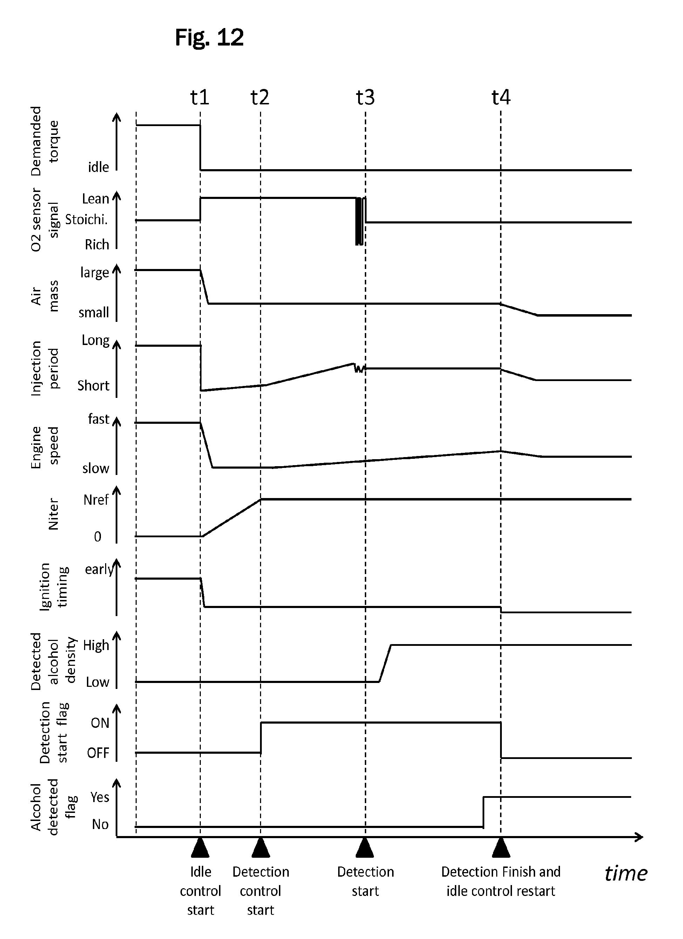

**Fig. 12** is an illustration of an example of various sensor output and ECU parameters during estimating an alcohol concentration in an alcohol fuel mixture according to the first embodiment of the present invention.

At first, at a time t1, the demanded torque goes down to a torque for the idle condition (1^{st} line of Fig. 12). As a result, the injection period is set to a short default injection period for the idle condition (4^{th} line of Fig. 12). If the supplied fuel is no pure gasoline but an alcohol fuel mixture (i.e. a mixture of gasoline and alcohol such as e.g. ethanol), the 02 sensor will detect the lean condition because the short default injection period is a default injection period for operating the internal combustion engine at (or at least close to) the stoichiometric condition in the idle state if pure gasoline is supplied to the internal combustion engine, i.e. step S302 returns "lean".

In order to bring the operation of the internal combustion engine to the stoichiometric condition, the injection period is iteratively increased (step S307) between times t1 and t2 (4^{th} line of Fig. 12) and the integer Niter is iteratively increased (step S308) between times t1 and t2 (6^{th} line of Fig. 12) until the integer Niter becomes equal to the reference integer Nref at time t2. Accordingly, step S306 above results in NO and the detection start flag is set to ON in step S309 at time t2 (9^{th} line of Fig. 12). As soon as the detection start flag is set to ON, the injection period is increased at a higher rate due to step S324 as discussed above. As a consequence, the slope of the increase of the injection period becomes larger after time t2 in the 4^{th} line of Fig. 12. Specifically, the control of the injection period before time t2 corresponds to an 02 feedback control for gasoline and the control of the injection period after time t2 corresponds to an 02 feedback control for alcohol concentration detection.

After a time t3, the internal combustion engine is operating at the stoichiometric condition and the detection of the alcohol concentration is started (steps S326 and S327 are performed repeatedly) and an alcohol concentration will be determined (8^{th} line of Fig. 12). As soon as it is detected after a few iterations that the parameters determined in steps S326 and S327 have converged (step S328 results in YES), the alcohol detected flag is set to YES shortly before time t4 in the 10^{th} line of Fig. 12. Finally, at time t4, the detection start flag may be set to OFF (9^{th} line of Fig. 12) and after time t4 all actuators are controlled by the engine control unit 20 appropriately on the basis of the determined alcohol concentration rate.

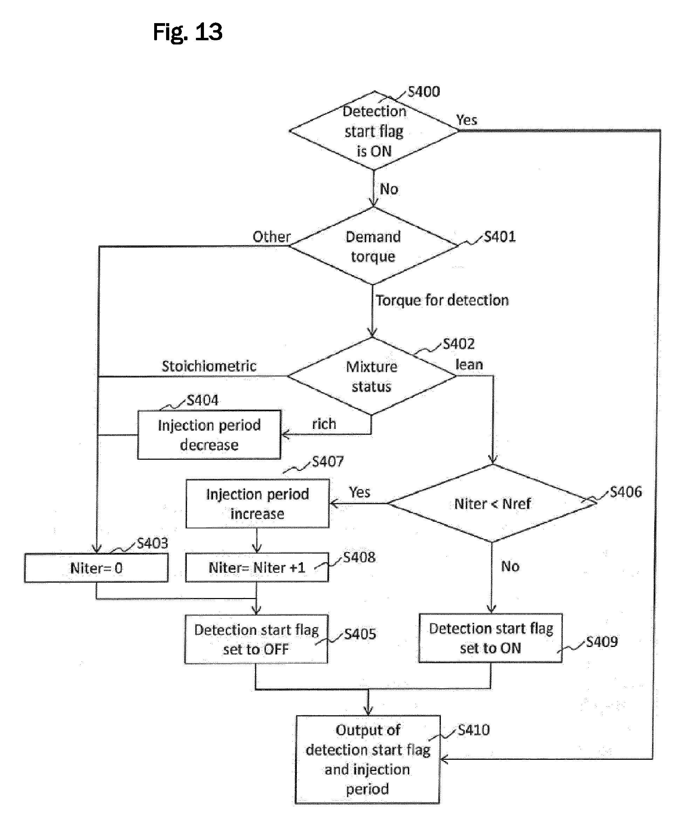

**Fig. 13** exemplarily shows a flow chart of judging on a detection start of detecting an alcohol concentration according to a second embodiment of the present invention. Exemplarily, the process of the flow chart of Fig. 13 can be executed by the judgment unit 201 of Fig. 5.

In step S400, the judgment unit 201 checks whether a detection start flag is ON or OFF. The detection start flag indicates whether alcohol detection shall be executed by the alcohol concentration determination unit 202 or not. If step S400 returns YES, the detection start flag may be output and a current injection period may be output in step S410. The current injection period indicates an injection period of fuel to the combustion chamber on the basis of which the injectors 3 shall be controlled by the engine control unit 20. After step S410, in the next control cycle, the judgment unit 201 may start again with step S400.

If step S400 returns NO, the judgment unit 201 continues with step S401 and determines, on the basis of the sensor output of the accelerator position sensor 11 and/or on the basis of the actuator signal to the throttle device 2, whether the demanded torque is a pre-defined torque for detection or not. If step S401 returns NO, the judgment unit 201 continues with step S403 and sets the integer Niter to zero, and sets the detection start flag to OFF in step S405. Then, the judgment unit 201 continues with step S410 and outputs the detection start flag and the current injection period. After step S410, in the next control cycle, the judgment unit 201 may start again with step S400.

In the above, the integer Niter shall represent an index that indicates a number of control iterations that are required to bring the operation of the internal combustion engine from the lean condition to the stoichiometric condition outside of an alcohol concentration detection loop as described in connection with Fig. 7 above.

On the other hand, if step S401 returns YES, the judgment unit 201 continues with step S402 and determines the combustion condition of the internal combustion engine on the basis of the sensor input from the 02 sensor 8. Specifically, the judgment unit 201 determines whether the internal combustion engine is operating in the lean condition, in the stoichiometric condition or in the rich condition based on the sensor input from the 02 sensor 8 (see e.g. Fig. 2B above).

In case the judgment unit 201 determines that the internal combustion engine is operating in the stoichiometric condition in step S402, the judgment unit 201 continues with step S403 and sets the integer Niter to zero, and sets the detection start flag to OFF in step S405. Then, the judgment unit 201 continues with step S410 and outputs the detection start flag and the current injection period. After step S410, in the next control cycle, the judgment unit 201 may start again with step S400 in the next iteration.

In case the judgment unit 201 determines that the internal combustion engine is operating in the rich condition in step S402, the judgment unit 201 continues with step S404 and decreases the injection period by a specific amount in order to reduce the fuel air ratio and bring the internal combustion engine to the stoichiometric condition, and then continues with step S403 and sets the integer Niter to zero, and sets the detection start flag to OFF in step S405. Then, the judgment unit 201 continues with step S410 and outputs the detection start flag and the current (decreased) injection period. After step S410, in the next control cycle, the judgment unit 201 may start again with step S400 in the next iteration.

In case the judgment unit 201 determines that the internal combustion engine is operating in the lean condition in step S402, the judgment unit 201 continues with step S406 and determines whether the current iteration value of the integer Niter is smaller than the reference value Nref. If step S406 returns YES, the judgment unit 201 continues with step S407 and increases the injection period by a specific amount in order to reduce the fuel air ratio and bring the internal combustion engine to the stoichiometric condition, and then continues with step S408 and increases the integer Niter by one (i.e. Niter -> Niter + 1), and sets the detection start flag to OFF in step S405. Then, the judgment unit 201 continues with step S410 and outputs the detection start flag and the current (increased) injection period. After step S410, in the next control cycle, the judgment unit 201 may start again with step S400 in the next iteration.

On the other hand, once step S406 returns NO, the judgment unit 201 continues with step S409 and sets the detection start flag to ON, and then continues with step S410 and outputs the detection start flag and the current injection period. After step S410, in the next control cycle, the judgment unit 201 may start again with step S400 in the next iteration.

If step S406 returns NO, this basically indicates that the internal combustion engine is still operating in the lean condition and not in the stoichiometric (or rich) condition although the injection period for the injectors 3 for increasing the fuel air ratio has been increased by the specific amount for a number of Nref iterations already. Here, the number of Nref is chosen such that the internal combustion engine would be operating in the stoichiometric (or rich) condition if pure gasoline is supplied to the internal combustion chamber. Thus, as soon as step S406 returns NO, the judgment unit 201 determines that an alcohol fuel mixture is supplied to the internal combustion engine and therefore initiates the estimation of the alcohol concentration in the alcohol fuel mixture by the alcohol concentration detection unit 202 by setting the detection start flag to ON in step S409.

It is to be noted that the injection amount can be changed by an absolute amount in steps S404 and S407 described above, or the injection amount can be changed by a relative amount, e.g. by setting the injection amount to C*current injection amount (C<1) in step S404 and by setting the injection amount to D*current injection amount (D>1) in step S407.

The process of Fig. 13 is similar to the process of Fig. 6 above with the exception that step S401 assumes a steady state torque condition, i.e. so that the alcohol concentration detection is performed at a constant load condition such as e.g. at a constant speed.

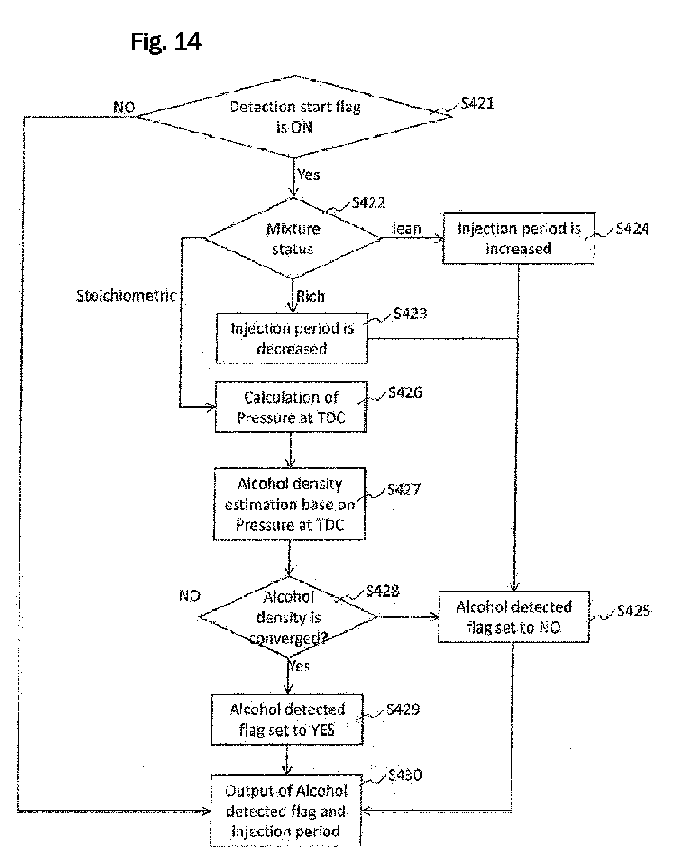

**Fig. 14** exemplarily shows a flow chart of performing detecting an alcohol concentration according to the second embodiment of the present invention. Exemplarily, the process of the flow chart of Fig. 14 can be executed by the alcohol concentration detection unit 202 of Fig. 5.

In step S421, the alcohol concentration detection unit 202 checks whether the detection start flag is set to ON or OFF. In case step S421 returns NO, the alcohol concentration detection unit 202 continues with step S430 and outputs an alcohol detected flag and the current injection period. The alcohol detected flag indicates whether the alcohol concentration has been estimated by the alcohol concentration detection unit 202. After step S430, in the next control cycle, the alcohol concentration detection unit 202 may start again with step S421 in the next iteration.

In case step S421 returns YES, i.e. when the detection start flag is set to ON (e.g. when step 309 or 409 has been executed by the judgment unit 201 above), the alcohol concentration detection unit 202 continues with step S422 and determines the combustion condition of the internal combustion engine on the basis of the sensor input from the 02 sensor 8. Specifically, the alcohol concentration detection unit 202 determines whether the internal combustion engine is operating in the lean condition, in the stoichiometric condition or in the rich condition based on the sensor input from the 02 sensor 8 (see e.g. Fig. 2B above).

If step S422 results in determining that the internal combustion engine is operating in the lean condition, the alcohol concentration detection unit 202 continues with step S424 and increases the injection period for the control of the injectors 3 in step S424 and sets an alcohol detected flag to NO in step S425. On the other hand, if step S422 results in determining that the internal combustion engine is operating in the rich condition, the alcohol concentration detection unit 202 continues with step S423 and decreases the injection period for the control of the injectors 3 in step S324 and sets an alcohol detected flag to NO in step S425. After step S425, the alcohol concentration detection unit 202 continues with step S430 and outputs the alcohol detected flag and the current injection period. After step S430, in the next control cycle, the alcohol concentration detection unit 202 may start again with step S421 in the next iteration.

In case step S422 results in determining that the internal combustion engine is operating in the stoichiometric condition, the alcohol concentration detection unit 202 continues with step S426 and determines the pressure in the combustion chamber at a time at which the piston was at the top dead center position (based on sensor inputs of the crank angle sensor 14 and the pressure sensor 12).

In step S427, the alcohol concentration detection unit 202 continues with estimating the alcohol concentration of the alcohol fuel mixture based on a relation between the alcohol concentration and the pressure in the combustion chamber at a time at which the piston was at the top dead center position (based on sensor inputs of the crank angle sensor 14 and the pressure sensor 12). The principles of the determination will be discussed further below.

In step S428, the alcohol concentration detection unit 202 continues with checking whether the estimated alcohol concentration has converged (i.e. whether the estimated alcohol concentration is similar to the alcohol concentration estimated in previous iterations). The purpose of step S428 is to make the estimation of the alcohol concentration more accurate, reliable and robust in that the effect of potential cycle-by-cycle variations in the measurement can be reduced. It is further possible to make the estimation of the alcohol concentration more accurate, reliable and robust by averaging the estimated values of plural cycle iterations as soon as the estimated values.

If step S428 returns NO, the alcohol concentration detection unit 202 continues with step 425 and sets the alcohol detected flag to NO. Otherwise, if step S428 returns YES, the alcohol concentration detection unit 202 continues with step 429 and sets the alcohol detected flag to YES. Then, in both cases, the alcohol concentration detection unit 202 continues with step S430 and outputs the alcohol detected flag and the current injection period. After step S430, in the next control cycle, the alcohol concentration detection unit 202 may start again with step S421 in the next iteration.

In the above steps S423 and S424, the injection period may be changed similar to steps S404 and S407 as described above, i.e. the injection amount can be changed by an absolute amount in steps S423 and S424 described above, or the injection amount can be changed by a relative amount, e.g. by setting the injection amount to C*current injection amount (C<1) in step S423 and by setting the injection amount to D*current injection amount (D>1) in step S424.

Here, the specific amount may be larger than the specific amount of steps S404 and S407 so that the injection period is changed more significantly in steps S423 and S424 compared to steps S404 and S407. Further alternatively, in step S424, in order to approach the stoichiometric condition faster, the increased new injection period may be calculated as 0.5*(Current injection period + reference injection period of ethanol fuel), wherein the reference injection period of ethanol fuel is an injection period for controlling the internal combustion engine in the stoichiometric condition in case ethanol is supplied to the internal combustion engine in the idle condition.

The process of Fig. 14 is similar to the process of Fig. 7 above with the exception that steps S426 and S427 estimate the alcohol concentration on the basis of the pressure inside the combustion chamber at the top dead center position between the compression stroke and the expansion stroke.

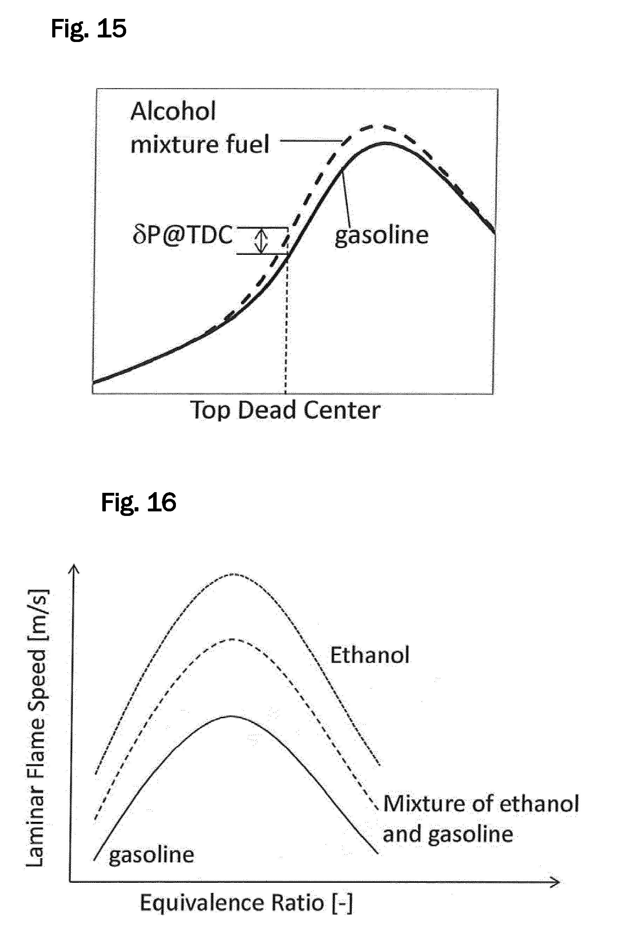

**Fig. 15** exemplarily shows a behavior of pressure in the combustion chamber as a function of the piston position for gasoline (solid line) and an alcohol fuel mixture (dashed line). If the ignition timing is at approximately 10 degrees before the top dead center position or earlier, there will a higher pressure in the combustion chamber for an alcohol fuel mixture compared to gasoline as shown in Fig. 15. This pressure difference is caused by differences of the combustion speed. Generally, a faster combustion speed generates faster pressure rise as seen for the alcohol fuel mixture in Fig. 15, wherein the combustion speed means a changing rate of air-fuel mixture gas from unburned gas to burned gas per unit time. Accordingly, due to the above mentioned pressure differences, the pressure inside the combustion chamber (or at a position later than the top dead center position as can be seen in Fig. 15) can be used for estimating the alcohol concentration.

**Fig. 16** exemplarily shows a laminar flame speed as a function of the equivalence ratio for gasoline, a mixture of ethanol and gasoline, and ethanol. The laminar flame speed is an index to show the combustion speed mentioned above. If the laminar flame speed is larger, the combustion speed will be larger as well. As shown in Fig. 16, the laminar flame speed of an alcohol fuel mixture is larger than that of pure gasoline. According to this difference in combustion speed, the pressure in the combustion chamber at the top dead center for an alcohol fuel mixture fuel is larger than the pressure for gasoline under the condition of the same ignition timing.

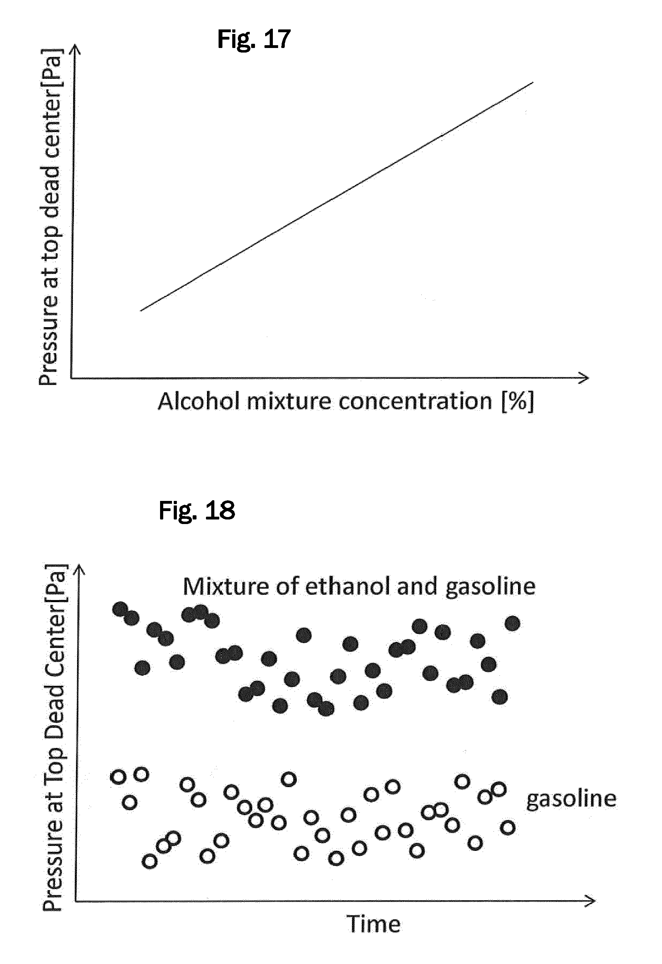

**Fig. 17** exemplarily shows a relationship between the pressure at the top dead center position and an alcohol mixture concentration. For the above discussed reasons, it is possible to predetermine (e.g. on an engine test bench during an experiment) the relationship between the pressure at the top dead center position and an alcohol mixture concentration of the alcohol fuel mixture. Such determined relation can be pre-stored in a storage unit of the engine control unit 20 such as in ROM 20d. To define the proportional line, it is preferred to use a defined condition having the same air mass in the combustion chamber and having the same ignition timing.

**Fig. 18** exemplarily shows a time evolution of the pressure at the top dead center position for gasoline and a mixture of ethanol and gasoline. As can be seen from Fig. 18, the pressure at the top dead center position for gasoline is smaller compared to the pressure at the top dead center position for a mixture of ethanol and gasoline. Such relation can be used in step S427 above for estimating the alcohol concentration in the alcohol fuel mixture with reduced processing burden on the engine control unit 20 and based on direct sensor input from the pressure sensor 12.

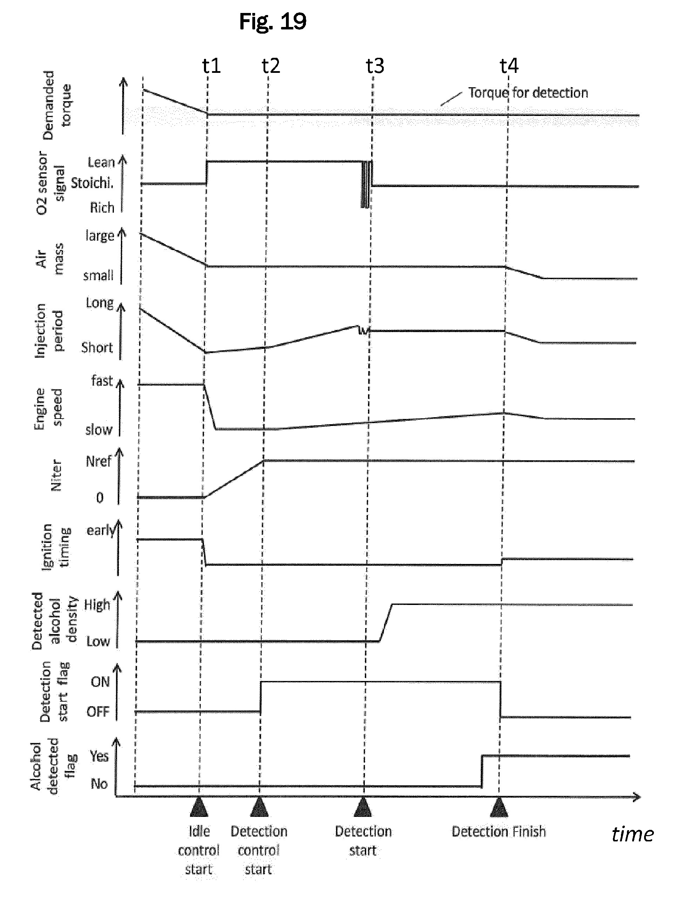

**Fig. 19** is an illustration of an example of various sensor output and ECU parameters during estimating an alcohol concentration in an alcohol fuel mixture according to the second embodiment of the present invention.

At first, at a time t1, the demanded torque goes down to a specific torque for detection according to a steady state torque condition at a constant load condition (1^{st} line of Fig. 19). As a result, the injection period is set to a short default injection period for the steady state torque condition under the assumption that pure gasoline is supplied (4^{th} line of Fig. 19). If the supplied fuel is no pure gasoline but an alcohol fuel mixture (i.e. a mixture of gasoline and alcohol such as e.g. ethanol), the 02 sensor will detect the lean condition because the short default injection period is a default injection period for operating the internal combustion engine at (or at least close to) the stoichiometric condition in the idle state if pure gasoline is supplied to the internal combustion engine, i.e. step S402 returns "lean".

In order to bring the operation of the internal combustion engine to the stoichiometric condition, the injection period is iteratively increased (step S407) between times t1 and t2 (4^{th} line of Fig. 19) and the integer Niter is iteratively increased (step S408) between times t1 and t2 (6^{th} line of Fig. 19) until the integer Niter becomes equal to the reference integer Nref at time t2. Accordingly, step S406 above results in NO and the detection start flag is set to ON in step S409 at time t2 (9^{th} line of Fig. 19). As soon as the detection start flag is set to ON, the injection period is increased at a higher rate due to step S424 as discussed above. As a consequence, the slope of the increase of the injection period becomes larger after time t2 in the 4^{th} line of Fig. 19.

After a time t3, the internal combustion engine is operating at the stoichiometric condition and the detection of the alcohol concentration is started (steps S426 and S427 are performed repeatedly) and an alcohol concentration will be determined (8^{th} line of Fig. 19). As soon as it is detected after a few iterations that the parameters determined in steps S426 and S427 have converged (step S428 results in YES), the alcohol detected flag is set to YES shortly before time t4 in the 10^{th} line of Fig. 19. Finally, at time t4, the detection start flag may be set to OFF (9^{th} line of Fig. 19) and after time t4 all actuators are controlled by the engine control unit 20 appropriately on the basis of the determined alcohol concentration rate.

As modifications of embodiments of the present invention as described above, it is of course possible to combine the process of Fig. 6 with the process of Fig. 14, and to combine the process of Fig. 7 with the process of Fig. 13. Also, it is possible to combine the processes of Figs. 7 and 13 and to determine the alcohol concentration based on both of the quotient of (PV)max and the injection period and on the basis of the pressure at (or at a position after) the top dead center position.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. Method for estimating an alcohol concentration in an alcohol fuel mixture supplied to an internal combustion engine, the method comprising:
- controlling the operation of the internal combustion engine supplied with the alcohol fuel mixture in a stoichiometric condition,
- determining a first parameter on the basis of a signal from a pressure sensor sensing the pressure inside a combustion chamber of the internal combustion engine being controlled in the stoichiometric condition, and
- determining the alcohol concentration of the alcohol fuel mixture on the basis of the determined first parameter and a pre-stored relation between the first parameter and the alcohol concentration of the alcohol fuel mixture.

2. Method according to claim 1, **characterized in that**
said first parameter is indicative of a maximum value of a product of the pressure inside the combustion chamber and a volume of the combustion chamber.

3. Method according to claim 2, **characterized in that**
said first parameter is indicative of a quotient of the maximum value of the product of the pressure inside the combustion chamber and the volume of the combustion chamber over a duration time of a fuel injection period per combustion cycle.

4. Method according to any one of claims 1 to 3, **characterized in that**
said first parameter is indicative of a pressure inside the combustion chamber at a first piston position of a piston reciprocating in the combustion chamber.

5. Method according to claim 4, **characterized in that**
the first piston position is a top dead center position of the piston; or
the first piston position is a piston position at a crank angle later than top dead center position of the piston, when the piston is moving back from the top dead center position towards a bottom dead center position of the piston.

6. Method according to any one of claims 1 to 5, **characterized in that**
controlling the operation of the internal combustion engine supplied with the alcohol fuel mixture in a stoichiometric condition comprises:
determining whether the internal combustion engine is controlled in the stoichiometric condition based on a signal from an oxygen sensor sensing an oxygen concentration in combusted gas being exhausted from the combustion chamber, and
changing, when it is determined that the internal combustion engine is operating in a lean condition or rich condition, a duration time of a fuel injection period per combustion cycle until it is determined that the internal combustion engine is controlled in the stoichiometric condition based on the signal from the oxygen sensor.

7. Method according to claim 6, **characterized in that**
changing the duration time of the fuel injection period per combustion cycle comprises increasing the duration time of the fuel injection period per combustion cycle when it is determined that the internal combustion engine is operating in the lean condition; and/or
changing the duration time of the fuel injection period per combustion cycle comprises decreasing the duration time of the fuel injection period per combustion cycle when it is determined that the internal combustion engine is operating in the rich condition.

8. Method according to claim 6 or 7, **characterized in that**
changing, when it is determined that the internal combustion engine is operating in a lean condition or rich condition, a duration time of a fuel injection period per combustion cycle is iteratively repeated until it is determined that the internal combustion engine is controlled in the stoichiometric condition.

9. Method according to claim 8, **characterized in that**
the fuel injection period per combustion cycle is iteratively changed by a first amount for a predetermined number of Nref iterations, until it is determined that the internal combustion engine is controlled in the stoichiometric condition, and,
when the internal combustion engine is not yet controlled in the stoichiometric condition after the Nref-th iteration, the fuel injection period per combustion cycle is iteratively changed by a second amount having an absolute value larger than an absolute value of the first amount for the (Nref+1)-th iteration and subsequent iterations until it is determined that the internal combustion engine is controlled in the stoichiometric condition.

10. Method according to claim 8, **characterized in that**
it is determined that the fuel supplied to the internal combustion engine substantially comprises only gasoline, when the internal combustion engine is controlled in the stoichiometric condition after Nref or less iterations, and the method refrains from determining the alcohol concentration of the alcohol fuel mixture when the internal combustion engine is controlled in the stoichiometric condition after Nref or less iterations.

11. Method according to any one of claims 1 to 10, **characterized in that**
the controlling the operation of the internal combustion engine in the stoichiometric condition is performed when the internal combustion engine is in an idle state; or
the controlling the operation of the internal combustion engine in the stoichiometric condition is performed when the internal combustion engine is in a constant load condition.

12. Apparatus for estimating an alcohol concentration in an alcohol fuel mixture supplied to an internal combustion engine according to a method according to at least one of claims 1 to 11, the apparatus comprising:
- a control unit for controlling the operation of the internal combustion engine supplied with the alcohol fuel mixture in a stoichiometric condition,
- a sensor input unit for receiving a signal from a pressure sensor sensing the pressure inside a combustion chamber of the internal combustion engine and/or a signal from an oxygen sensor sensing an oxygen concentration in combusted gas being exhausted from the combustion chamber, and
- a processing unit for determining a first parameter based on a signal from a pressure sensor sensing the pressure inside a combustion chamber of the internal combustion engine being controlled in the stoichiometric condition, and for determining the alcohol concentration of the alcohol fuel mixture on the basis of the determined first parameter and a pre-stored relation between the first parameter and the alcohol concentration of the alcohol fuel mixture.

13. Apparatus according to claim 12, **characterized by**
- a memory unit storing the relation between the first parameter and the alcohol concentration of the alcohol fuel mixture.

14. Computer program product comprising computer program means for causing a vehicle control apparatus to execute the steps of a method according to at least one of claims 1 to 11.
